# EUROPÄISCHE PATENTSCHRIFT

(11) **EP 2 284 485 B1**
(45) Veröffentlichungstag und Bekanntmachung des Hinweises auf die Patenterteilung: **16.09.2015**
(21) Anmeldenummer: 10185234.1
(22) Anmeldetag: 16.12.2005
(51) Int. Cl.: G01B 21/04, G01B 5/00, G01B 11/245

(54) **Koordinatenmessgerät sowie Verfahren zum Messen mit einem Koordinatenmessgerät**
Method for measuring with a coordinate measuring device and coordinate measuring device
Appareil de mesure de coordonnées et procédé de mesure à l'aide d'un appareil de mesure de coordonnées

(30) Priorität: 16.12.2004 DE 102004061151
(43) Veröffentlichungstag der Anmeldung: 16.02.2011
(62) Teilanmeldung aus: 10165895.3
(73) Patentinhaber: Werth Messtechnik GmbH, 35394 Giessen (DE)
(72) Erfinder: Christoph, Ralf, 35394 Gießen (DE); Rauh, Wolfgang, 35094 Lahntal-Goßfelden (DE); Andräs, Matthias, 61197 Florstadt (DE); Wachter, Uwe, 88094 Oberteuringen (DE)
(74) Vertreter: Stoffregen, Hans-Herbert

(56) Entgegenhaltungen:
- EP-A1- 1 128 156
- DE-A1- 19 747 027
- GB-A- 2 227 563
- JP-A- 61 017 011
- US-A- 5 031 331

## Beschreibung

Die Erfindung bezieht sich auf ein Verfahren zum Messen von Werkstückgeometrien mit einem Koordinatenmessgerät mit beweglichen Verfahrachsen und einem oder mehreren Sensoren zur Erfassung von Messpunkten auf den Werkstückoberflächen.

Ferner nimmt die Erfindung Bezug auf ein Koordinatenmessgerät zum Messen von Werkstückgeometrien, umfassend mehrere bewegliche Verfahrachsen sowie mehrere Sensoren zur Erfassung von Messpunkten auf zumindest einer Oberfläche des Werkstücks.

Unter Koordinatenmessgeräten werden Messgeräte mit einer oder mehreren mechanisch bewegten Achsen zur Messung von geometrischen Eigenschaften von Werkstücken bzw. Messobjekten verstanden. Diese Koordinatenmessgeräte sind mit Sensoren zur Aufnahme der geometrischen Messpunkte an den Werkstückoberflächen ausgestattet. Stand der Technik sind überwiegend Koordinatenmessgeräte mit rein taktilen Sensoren, d. h. der Messpunkt wird durch Berührung der Werkstückoberfläche mit einem taktilen Fühler erzeugt. Ebenfalls bekannt sind Koordinatenmessgeräte mit optischen Sensoren, bei denen die Messpunkte durch eine opto-elektronische Bildverarbeitung oder ein Laserabstandssensor ermittelt werden. Es sind ebenfalls Koordinatenmessgeräte bekannt, bei denen einzelne dieser Sensoren miteinander kombiniert und so erweiterte Möglichkeiten für den Anwender gegeben sind.

Einen Überblick über die Koordinatenmesstechnik ergibt sich aus den Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4).

Immer wieder ist es festzustellen, dass das zum Einsatz gelangende Koordinatenmessgerät für die jeweilige Messaufgabe nicht optimal konfiguriert ist, so dass folglich mehrere Geräte verschiedener Bauarten notwendig sind.

Den Dokumenten GB 2 227 563 A, JP 61017011, US 5,031,331 A, EP 1 128 156 A1 sind Koordinatenmessgeräte zum Messen von Werkstückgeometrien mit mehreren beweglichen Verfahrachsen zu entnehmen, wobei jedes Koordinatenmessgerät einen Sensor zur Erfassung von Messpunkten auf einer Werkstückoberfläche aufweist. Zur Kompensation von temperaturbedingten Fehlern werden Temperatursensoren an den den jeweiligen Sensor mit einem Grundrahmen des Koordinatenmessgerätes verbindenden Elementen oder an dem Sensor selbst angeordnet.

Aus der DE 197 47 027 A1 ist ein Multisensor-Koordinatenmessgerät bekannt, das einen taktilen Taster, einen Viedeotaster und einen Lasertaster umfasst.

Auf dem Gebiet der Koordinatenmesstechnik ist es bekannt, bei Geräten, die einen einzigen Sensor aufweisen, Temperaturmessungen durchzuführen, um Messverfalschungen zu vermeiden. Insoweit ist beispielhaft auf die GB 2 227 563 A , die JP 61 017011 A, die US 5 031 331 A und die EP 1 128 156 A1 zu verweisen.

Ein Multisensor-Koordinatenmessgerät ist aus der DE 197 47 027 A1 bekannt.

Der vorliegenden Erfindung liegt u.a. die Aufgabe zugrunde, präzise Messungen der Werkstückgeometrien zu ermöglichen, insbesondere sicherzustellen, dass temperaturbedingte Messfehler unterbleiben.

Zur Lösung sieht die Erfindung gemäß den Ansprüchen 1 und 4 vor, dass zur Kompensation von Fehlereinflüssen die Temperatur der mechanischen Verbindungselemente, über die die Sensoren verbunden sind, an einer oder mehreren Stellen gemessen und berücksichtigt wird.

Hervorzuheben ist, dass zur Kompensation von Fehlereinflüssen durch Temperaturschwankungen am Aufstellort des Koordinatenmessgeräts die Temperatur der mechanischen Baugruppen, die zur Befestigung der verschiedenen Sensoren dienen, an einer oder mehreren Stellen gemessen wird und die Ausdehnung der entsprechenden mechanischen 8. Mai 2014 - 50576 neue Beschreibungsseite

Komponenten bei der Berechnung der Messpunkte, die von den verschiedenen Sensoren erfasst wird, berücksichtigt werden.

In Ausgestaltung der Erfindung wurde vorgeschlagen, dass die Temperaturkompensation linear multiplikativ erfolgt.

Ein Koordinatenmessgerät zum Messen von Werkstückgeometrien, umfassend mehrere bewegliche Verfahrachsen sowie mehrere Sensoren zur Erfassung von Messpunkten auf zumindest einer Oberfläche des Werkstücks zeichnet sich dadurch aus, dass die Sensoren in dem Koordinatenmessgerät über Verbindungselemente verbunden sind, die ein oder mehrere Temperaturmesspunkte zur Ermittlung temperaturbedingter Positionsänderungen zwischen den Sensoren aufweisen, wobei die Verbindungselemente mit einem oder mehreren Temperatursensoren ausgestattet sind, die mit einem Auswerterechner des Koordinatenmessgeräts verbunden sind.

Weitere Einzelheiten, Vorteile und Merkmale der Erfindung ergeben sich nicht nur aus den Ansprüchen, den diesen zu entnehmenden Merkmalen für sich und/oder in Kombination, sondern auch aus der nachfolgenden Beschreibung von der Zeichnung zu entnehmenden bevorzugten Ausführungsbeispielen.

Es zeigen:
- Fig. 1: eine Prinzipdarstellung eines Koordinatenmessgerätes,
- Fig. 2: einen Ausschnitt eines Koordinatenmessgerätes in Prinzipdarstellung,
- Fig. 3: eine Prinzipdarstellung eines Koordinatenmessgerätes mit Bildverarbeitungs- und Laserabstandssensor und
- Fig. 4: eine Anordnung mit zwei miteinander verbundene Sensoren.

Die Erfindung wird nachstehend an bevorzugten Ausführungsbeispielen näher erläutert.

Die entsprechenden Ausführungen erfolgen dabei vor dem Hintergrund, dass Kenntnisse der Koordinatenmesstechnik präsent sind. Ergänzend wird insoweit auf die Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4) verwiesen, auf die ausdrücklich Bezug genommen wird und deren Inhalte zum Offenbarungsgehalt der Beschreibung gehören.

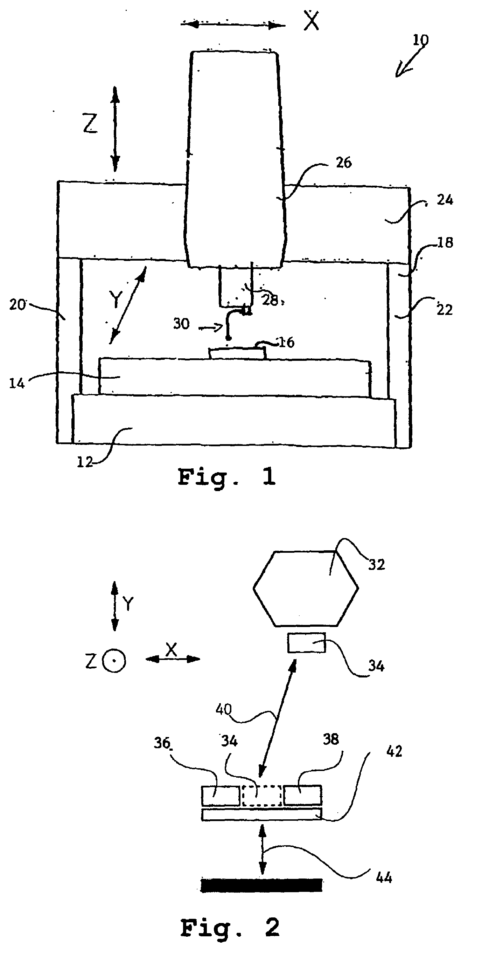

In Fig. 1 ist rein prinzipiell ein Koordinatenmessgerät 10 dargestellt, das mit dem für die jeweilige Lösung einer Messaufgabe erforderlichen Sensor bzw. den erforderlichen Sensoren ausgestattet ist. Die Sensoren können wahlweise montiert oder demontiert werden oder über entsprechende Sensorwechselsysteme auch während des Betriebes automatisch ein- und ausgewechselt werden. Hierdurch ist ein flexibles Messen komplexer Werkstückgeometrien möglich. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Das hinlänglich bekannte und noch einmal in der Fig. 1 wiedergegebene Prinzip eines Koordinatenmessgerätes 10 umfasst einen z. B. aus Granit bestehenden Grundrahmen 12 mit Messtisch 14, auf dem ein zu messendes Objekt 16 positioniert wird, um dessen Oberflächeneigenschaften zu messen.

Entlang dem Grundrahmen 12 ist ein Portal 18 in Y-Richtung verstellbar. Hierzu sind Säulen oder Ständer 20, 22 gleitend am Grundrahmen 12 abgestützt. Von den Säulen 20, 22 geht eine Traverse 24 aus, entlang der ein Schlitten verfahrbar ist, der seinerseits eine Pinole oder Säule 26 aufnimmt, die in Z-Richtung verstellbar ist. Von der Pinole 26 bzw. ggfs. einer mit der Pinole 26 verbundenen Wechselschnittstelle 28 geht ein Sensor 30 aus, der im Ausführungsbeispiel als taktiler Sensor ausgebildet ist, der dann, wenn die Pinole 26 einen Bildverarbeitungssensor enthält, taktil-optisch misst. Insoweit wird jedoch auf hinlänglich bekannte Techniken verwiesen, genauso wie in Bezug auf weitere zum Einsatz gelangende Sensoren wie Laserabstandssensor, Weißlichtinterferometer, Bildverarbeitungssensoren, Röntgensensorik oder chromatischer Fokussensor oder konfokaler Scanning-Messkopf, ohne dass hierdurch eine Einschränkung der erfindungsgemäßen Lehre erfolgt. Der bzw. die Sensoren werden entsprechend der Messaufgabe ausgewählt und eingesetzt, um das Koordinatenmessgerät 10 für die jeweilige Messaufgabe optimal zu konfigurieren. Gleichzeitig werden Probleme gelöst, die bei üblichen Koordinatenmessgeräten auftreten.

Um das Koordinatenmessgerät 10 mit dem geeigneten Sensor nutzen zu können, kann das Koordinatenmessgerät einen Sensorwechsler aufweisen, wie dies prinzipiell der Fig. 2 zu entnehmen ist. So können mehrere Sensoren jeweils wahlweise über eine Wechselschnittstelle mit dem Koordinatenmessgerät versehen und von Hand oder durch automatisches Abholen des Koordinatenmessgerätes an einer Parkstation ausgewechselt werden.

In Fig. 2 ist ein Ausschnitt eines Koordinatenmessgerätes mit einer Pinole 32 in Draufsicht wiedergegeben. Die mit der Pinole verbindbaren Sensoren sind mit den Bezugszeichen 34, 36, 38 gekennzeichnet. Dabei können die Sensoren 34, 36, 38 optisch oder taktil ausgeführt sein, um nur beispielhaft Sensorarten zu nennen. Das Koordinatenmessgerät, d. h. die Pinole 32 ist in Y-X-Z-Richtung derart verstellbar, um einen Austausch der Sensoren 34, 36, 38 vorzunehmen. Im Ausführungsbeispiel positioniert die Pinole 32 und somit das Koordinatenmessgerät auf einem Positionierweg 40 den Sensor 34 in eine Parkstation 42 und ist sodann in der Lage, einen der in der Parkstation 42 abgelegten Sensoren 36, 38 aufzunehmen und wieder an der Pinole 32 anzubringen. Die Parkstation 42 bzw. das Tasterwechslersystem kann durch eine Verstellachse 44 so verstellt werden, dass der Tasterwechsler 42 bei Nichtbetrieb außerhalb des Messvolumens des Koordinatenmessgerätes angeordnet ist.

Bei Anwendung von Bildverarbeitungssensoren in Koordinatenmessgeräten ist es für den Anwender erforderlich, verschiedene Vergrößerungen einzustellen. Dem widerspricht die Forderung nach kostenoptimierten optischen Systemen sowie hohen Abbildungsgüten, die mit den sonst erforderlichen Zoom-Optiken nur schwer zu erreichen sind. Um diesen Forderungen zu genügen ist vorgesehen, dass die Kamera des Bildverarbeitungssensors mit einer größeren Auflösung (Pixelanzahl) gewählt wird als die Auflösung des verwendeten Monitors bzw. des für die Bilddarstellung verwendeten Monitorsausschnitts. Im Weiteren kann die Kamera mit wahlfreiem Zugriff auf bestimmte Ausschnitte des Gesamtbildes ausgestattet sein. Es ist dann möglich, dass im Live-Bild oder Beobachtungsbild des Koordinatenmessgerätes nur ein Ausschnitt des Gesamtbildes dargestellt wird, der auf das Format des jeweiligen Anzeigefensters bzw. Monitors vergrößert wird. Im Ergebnis hat der Anwender die Möglichkeit gezoomte Ausschnitte des Bildes entsprechend seinen Vorstellungen auszuwählen. Die Vergrößerung zwischen Messobjekt und Monitorbild kann durch Verändern des gewählten Ausschnittes des Kamerabildes durch die Software gesteuert werden oder auch das Live-Bild in gleicher Weise dargestellt werden. Die Vergrößerung zwischen Messobjekt und Monitorbild kann durch Verändern des gewählten Ausschnittes des Kamerabildes verändert werden. Dies kann gegebenenfalls durch einen Drehknopf, der in dem Steuerungssystem des Koordinatenmessgerätes integriert ist, oder über einen Softwareregler bedient werden. Es ist fernerhin möglich, dass bei Einsatz einer hochauflösenden Kamera das Bild bzw. der Bildausschnitt nur in der geringeren Auflösung des Monitors angezeigt wird, im Hintergrund jedoch die volle Auflösung der Kamera zur digitalen Bildverarbeitung eingesetzt wird, um die Genauigkeit zu steigern. Die wirkliche optische Vergrößerung der Abbildungsoptik der Bildverarbeitung ist hierbei relativ gering (typisch 1-fach, höchstens jedoch 5-fach) und durch die Darstellung lediglich eines Ausschnittes des hoch auflösenden Kamerabildes auf dem geringer auflösenden Monitor wird die optische Wirkung einer höheren Vergrößerung erreicht.

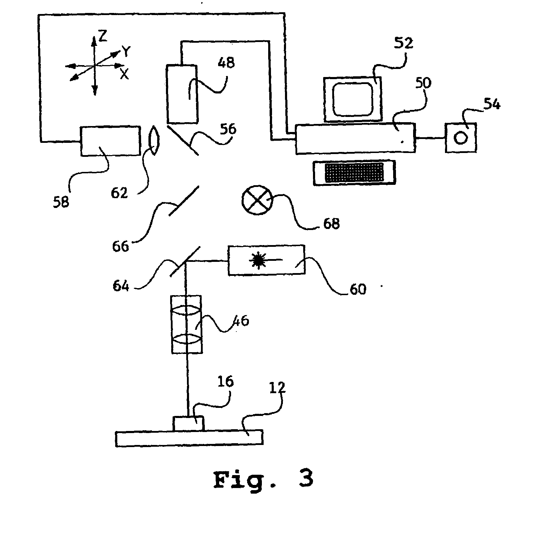

Das zuvor erläuterte Verfahren soll prinzipiell anhand der Fig. 3 erläutert werden. In der Fig. 3 ist ein Ausschnitt eines Koordinatenmessgerätes angeordnet. So ist auf dem Messtisch 12 das zu messende Objekt 16 dargestellt. Oberhalb des Messobjekts 16 sind ein Abbildungsobjektiv 46 sowie eine Kamera wie CCD-Kamera 48 angeordnet, die über einen Rechner 50 mit einem Monitor 52 verbunden ist. Durch die Hardware des Rechners 50 wird es möglich, die Auflösung zwischen der Kamera 48 und dem Monitor 52 rechnerisch anzupassen, um z. B. eine größere Kameraauflösung zu verwenden, als durch den Monitor 52 wiedergegeben werden kann. Gleichfalls ist es hierbei möglich, mit wahlfreiem Zugriff auf bestimmte Ausschnitte des Gesamtbildes zuzugreifen oder das Live- oder Beobachtungsbild des Koordinatenmessgerätes nur als Ausschnitt des Gesamtbildes auf das Format des Anzeigefensters vergrößert darzustellen. Durch die Wahl verschiedener Ausschnitte des erfassten Kamerabildes für die Darstellung auf dem Monitor 52 kommt für den Betrachter eine unterschiedlich wirksame Vergrößerung des Gesamtstrahlenganges zustande. Diese Vergrößerung kann durch Veränderung des Ausschnitts den Erfordernissen der Anwendung angepasst werden. Durch z. B. einen an den Rechner 50 angeschlossenen elektronischen Drehgeber 54 ist dies ergonomisch bedienbar. Es kann ferner realisiert werden, dass die eigentliche Bildauswertung im Rechner 50 mit der vollen Auflösung des erfassten Kamerabildes durch die Kamera 48 erfolgt. Als typische Vergrößerung für das Messobjektiv 46 kommt hierbei eine einfache, höchstens jedoch 5-fache Vergrößerung in Frage. Eine höhere optische Vergrößerung wird durch die zuvor beschriebene Auflösungsanpassung realisiert. Durch eine zusätzliche Anordnung eines Spiegels 56 und einer weiteren Kamera 58 ist es möglich, den Auslösungsbereich noch stärker zu variieren. Die Umschaltung erfolgt ebenfalls über den Rechner 50. Es können hierbei sowohl Kameras mit verschiedener Chipgröße bei gleicher Pixelanzahl als auch mit verschiedener Pixelanzahl bei gleicher Chipgröße oder beides kombiniert verwendet werden. Zusätzlich kann ein Laserabstandssensor 60 den gleichen optischen Strahlengang verwenden.

Im Ausführungsbeispiel wird die Kamera 58 mit einer zusätzlichen Nachvergrößerungsoptik 62 ausgestattet, um den Abbildungsmaßstab zu definieren. Die im Strahlengang verwendeten optischen Teiler oder Spiegel, die in der Fig. 3 mit den Bezugszeichen 56 und 64 gekennzeichnet sind, sind so ausgelegt, dass nach der Teilung alle betroffenen Kameras 48, 58 bzw. Sensoren 60 mit der gleichen Lichtintensität ausgestattet sind. Über einen weiteren optischen Teiler 66 und eine Beleuchtungseinrichtung 68 wird ein integriertes Hellfeldauflicht realisiert. Zusätzlich zu der erläuterten Verfahrensweise kann durch Re-Sampling aus dem jeweils erfassten Kamerabild ein noch höher aufgelöstes Kamerabild mit dem Zwecke der Darstellung einer noch höheren Vergrößerung dargestellt werden. Hierbei werden jeweils zwischen real gemessenen Bildpunkten zusätzliche Bildpunkte durch Interpolation rechnerisch ermittelt. Koordinatenmessgeräte sind im Allgemeinen am Einsatzort unterschiedlichen Einsatztemperaturen ausgesetzt. Sind mehrere Sensoren am Koordinatenmessgerät angebracht, führt dies dazu, dass thermisch bedingt sich die Positionen zwischen den verschiedenen Sensoren verändern. Dies führt zu Messfehlern. Erfindungsgemäß wird zur Kompensation dieser die Temperatur der zur Befestigung der verschiedenen Sensoren benötigten mechanischen Baugruppen an einer oder mehreren Stellen gemessen und die Ausdehnung der entsprechenden mechanischen Komponenten bei der Berechnung der Messpunkte, die von den verschiedenen Sensoren erfasst werden, berücksichtigt.

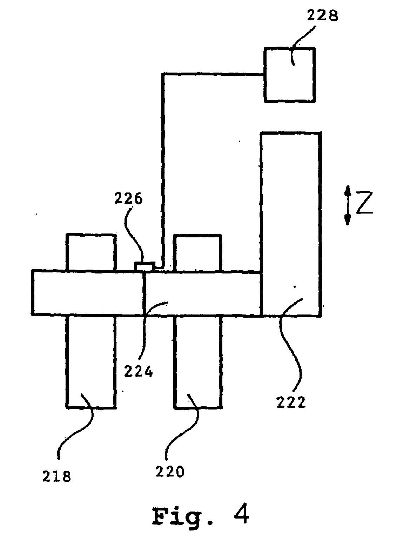

So zeigt Fig. 4 beispielhaft eine Anordnung mit zwei Sensoren 218, 220 an einer Z-Achse 222 eines Koordinatenmessgerätes. Die Sensoren 218, 220 sind eine oder mehre-28. Oktober 2013-50576 neue Beschreibungsseiten 1 bis 8 re Verbindungselemente 224 miteinander und der Z-Achse 222 verbunden. Durch einen Temperatursensor 226 wird die Temperatur des oder der Verbindungselemente 224 während der Messung fortwährend gemessen und über einen Auswerterechner 228 die entsprechende Längenveränderung korrigiert und für die Messergebnisse berücksichtigt.

## Patentansprüche

1. Verfahren zum Messen von Werkstückgeometrien mit einem Koordinatenmessgerät (10) mit beweglichen Verfahrachsen (222) und mehreren Sensoren (34, 36, 38, 118, 120) zur Erfassung von Messpunkten auf Werkstückoberflächen,
**dadurch gekennzeichnet,**
**dass** zur Kompensation von Fehlereinflüssen die Temperatur der mechanischen Verbindungselemente (224), über die Sensoren (34, 36, 38, 118, 120) verbunden sind, an einer oder mehreren Stellen gemessen und berücksichtigt wird.

2. Verfahren nach Anspruch 1,
**dadurch gekennzeichnet,**
**dass** zur Kompensation von Fehlereinflüssen durch Temperaturschwankungen am Aufstellort des Koordinatenmessgeräts (10) die Temperatur der mechanischen Verbindungselemente (224), die zur Verbindung der verschiedenen Sensoren (34, 36, 38, 118, 120) dienen, an einer oder mehreren Stellen gemessen wird und die Ausdehnung der entsprechenden mechanischen Komponenten bei der Berechnung der Messpunkte, die von den verschiedenen Sensoren erfasst werden, berücksichtigt wird.

3. Verfahren nach Anspruch 1 oder 2,
**dadurch gekennzeichnet,**
**dass** die Temperaturkompensation linear multiplikativ erfolgt.

4. Koordinatenmessgerät zum Messen von Werkstückgeometrien, umfassend mehrere bewegliche Verfahrachsen (222) sowie Sensoren (218, 220) zur Erfassung von Messpunkten auf zumindest einer Oberfläche des Werkstücks,
**dadurch gekennzeichnet,**
**dass** die Sensoren (218, 220) in dem Koordinatenmessgerät über Verbindungselemente (224) verbunden sind, die einen Temperaturmesspunkt oder mehrere Temperaturmesspunkte zur Ermittlung temperaturbedingter Positionsänderung zwischen den Sensoren aufweisen, wobei die Verbindungselemente (224) mit einem oder mehreren Temperatursensoren (226) zur Messung der Temperatur der Verbindungselemente (224) an dem Temperaturmesspunkt oder an den Temperaturmesspunkten ausgestattet sind, die mit einem Auswerterechner (228) des Koordinatenmessgeräts verbunden sind.

## Claims

1. A method for measuring workpiece geometries with a coordinate measuring device (10) with movable transverse axes (222) and several sensors (34, 36, 38, 118, 120) for recording measuring points on the workpiece surfaces,
**characterized in that**
to compensate for error influences, the temperature of the mechanical connecting elements (224), via which sensors (34, 36, 38, 118, 120) are connected, is measured at one or several locations and taken into consideration.

2. Method according to claim 1,
**characterized in that**
to compensate for error influences due to temperature fluctuations at the location of installation of the coordinate measuring device (10), the temperature of the mechanical connecting elements (224), which serve for connecting the several sensors (34, 36, 38, 118, 120), is measured at one or several locations, and the expansion of the corresponding mechanical components is taken into consideration when calculating the measuring points that are recorded by the several sensors.

3. Method according to claim 1 or 2,
**characterized in that**
the temperature compensation is carried out by linear multiplication.

4. Coordinate measuring device for measuring workpiece geometries, comprising several movable transverse axes (222) as well as sensors (218, 220) for recording measuring points on at least one surface of the workpiece,
**characterized in that**
the sensors (218, 220) in the coordinate measuring device are connected via connecting elements (224), which have one temperature measuring point or several temperature measuring points for determining temperature-related changes in position between the sensors, wherein
the connecting elements (224) are equipped with one or several temperature sensors (226) for measuring the temperature of the connecting elements (224) at the temperature measuring point or the temperature measuring points, wherein the temperature sensors are connected with the evaluation computer (228) of the coordinate measuring device.

## Revendications

1. Procédé pour mesurer des géométries de pièces d'oeuvre avec un appareil de mesure de coordonnées (10) doté d'axes de translation (222) mobiles et de plusieurs capteurs (34, 36, 38, 118, 120) pour saisir des points de mesure sur les surfaces de la pièce d'oeuvre,
**caractérisé en ce**
**que** la température des éléments de liaison (224) mécaniques, au moyen desquels sont reliés des capteurs (34, 36, 38, 118, 120), est mesurée à un ou plusieurs point(s) et prise en compte afin de compenser des facteurs d'erreur.

2. Procédé selon la revendication 1,
**caractérisé en ce**
**que** pour compenser des facteurs d'erreur dus à des variations de température au lieu d'implantation de l'appareil de mesure de coordonnées (10), la température des éléments de liaison (224) mécaniques qui servent à relier les différents capteurs (34, 36, 38, 118, 120), est mesurée à un ou plusieurs point(s), et que la dilatation des composants mécaniques correspondants est prise en compte dans le calcul des points de mesure saisis par les différents capteurs.

3. Procédé selon la revendication 1 ou 2,
**caractérisé en ce**
**que** la compensation de température a lieu sous forme linéaire multiplicative.

4. Appareil de mesure de coordonnées pour mesurer des géométries de pièces d'oeuvre, comprenant plusieurs axes de translation (222) mobiles ainsi que des capteurs (218, 220) pour saisir des points de mesure sur au moins une surface de la pièce d'oeuvre,
**caractérisé en ce**
**que** les capteurs (218, 220) dans l'appareil de mesure de coordonnées sont reliés par des éléments de liaison (224) qui présentent un point de mesure de température ou plusieurs points de mesure de température pour déterminer des modifications de position entre les capteurs dues à la température, sachant que les éléments de liaison (224) sont équipés d'un ou de plusieurs capteurs(s) de température (226), destiné(s) à mesurer la température des éléments de liaison (224) au point de mesure de température ou aux points de mesure de température, et qui est/sont relié(s) à un ordinateur d'analyse (228) de l'appareil de mesure de coordonnées.
